# EUROPEAN PATENT APPLICATION

(11) **EP 4 535 465 A1**
(43) Date of publication of application: **09.04.2025**
(21) Application number: 22948510.7
(22) Date of filing: 30.06.2022
(51) Int. Cl.: H01M 4/505

(54) **POSITIVE ELECTRODE MATERIAL, ELECTROCHEMICAL APPARATUS AND ELECTRICAL APPARATUS**

(71) Applicant: Ningde Amperex Technology Limited, Ningde, Fujian 352100 (CN)
(72) Inventor: LANG, Ye, Ningde, Fujian 352100 (CN); YUAN, Guoxia, Ningde, Fujian 352100 (CN); ZHOU, Juan, Ningde, Fujian 352100 (CN); XU, Leimin, Ningde, Fujian 352100 (CN)
(74) Representative: Icosa
(86) International application number: PCT/CN2022/102822
(87) International publication number: WO 2024/000405

(57) **Abstract**

A positive electrode material, including a lithium manganese oxide, where a Raman spectrum of the positive electrode material has a characteristic peak 1 within a range of 401 cm⁻¹ to 410 cm⁻¹ and a characteristic peak 2 within a range of 598 cm⁻¹ to 611 cm⁻¹. The positive electrode material has high charge gram capacity and excellent structural stability, thereby improving the cycling and storage performance of the electrochemical apparatus while greatly increasing the energy density of the electrochemical apparatus.

## Description

### TECHNICAL FIELD

This application relates to the technical field of batteries, and specifically relates to a positive electrode material, an electrochemical apparatus, and an electrical apparatus.

### BACKGROUND

To address severe issues such as the global energy crisis, environmental pollution, climate changes, and low-carbon economy, the research and application of power supplies in electric vehicles, large power supplies, and power supplies in the energy storage field have become inevitable.

Spinel LiMn₂O₄ and olivine type LiFePO₄ have been widely used as positive electrode materials in lithium-ion batteries due to their low cost, good safety, and good reliability. However, LiMn₂O₄ and LiFePO₄ materials also have the problem of causing low energy density of lithium-ion batteries due to their low charge and discharge gram capacities.

To improve the energy density of the lithium-ion batteries using the above material systems, solutions such as increasing a Li/Mn ratio of the spinel LiMn₂O₄ material, performing high-valence cation doping, or mixing high-energy-density positive electrode materials such as ternary materials are used in the prior art. However, increasing the Li/Mn ratio or performing high-valence cation doping severely deteriorates the high-temperature cycling performance of lithium-ion batteries, while mixing high-energy-density positive electrode materials such as ternary materials significantly causes a large cost increase of lithium-ion batteries.

### SUMMARY

In view of the foregoing problems in the prior art, this application provides a positive electrode material and an electrochemical apparatus including such positive electrode material. The positive electrode material of this application has high charge gram capacity and excellent structural stability, thereby improving the cycling and storage performance of the electrochemical apparatus while greatly increasing the energy density of the electrochemical apparatus.

In a first aspect, this application provides a positive electrode material including a lithium manganese oxide, where a Raman spectrum of the positive electrode material has a characteristic peak 1 within a range of 401 cm⁻¹ to 410 cm⁻¹ and a characteristic peak 2 within a range of 598 cm⁻¹ to 611 cm⁻¹. The characteristic peak 1 is a characteristic peak of an orthorhombic phase in the lithium manganese oxide, and the characteristic peak 2 is a characteristic peak of a monoclinic phase in the lithium manganese oxide. On one hand, the orthorhombic phase and monoclinic phase in the lithium manganese oxide have a high lithium storage capacity, which can provide a high charge gram capacity, thereby significantly increasing the energy density of the electrochemical apparatus. On the other hand, the monoclinic phase and the orthorhombic phase coexist to form a solid solution, which can improve the structural stability of the lithium manganese oxide when the electrochemical apparatus is in a charging state. The solid solution formed by the coexistence of the two phases has oxygen vacancy, which can promote deintercalation of lithium ions, thereby further increasing the charge gram capacity of the lithium manganese oxide. In addition, the presence of a composite phase structure of the orthorhombic phase and the monoclinic phase in the lithium manganese oxide can stabilize the structure of Mn and reduce lattice distortion of an octahedron, improving the stability of the crystal structure of the lithium manganese oxide in a highly delithiated state, thereby suppressing dissolution of the element Mn, and improving the cycling and storage performance of the electrochemical apparatus.

In some embodiments, a half-peak width of the characteristic peak 1 is H1, and a half-peak width of the characteristic peak 2 is H2, satisfying: H1 ≤ 25 cm⁻¹, and H2 ≤ 30 cm⁻¹. When the half-peak width H1 of the characteristic peak 1 and the half-peak width H2 of the characteristic peak 2 are within the above range, the orthorhombic phase and the monoclinic phase in the lithium manganese oxide both have high crystal regularity, which can suppress structural phase transitions during cycling and storage, thereby improving the cycling and storage performance of the electrochemical apparatus.

In some embodiments, a peak area of the characteristic peak 1 is S1, and a peak area of the characteristic peak 2 is S2, satisfying: 1 ≤ S2/S1 ≤ 5.

In some embodiments, 1 ≤ S2/S1 ≤ 1.3, or 2.2 ≤ S2/S1 ≤ 5. When S2/S1 is within the above range, the contents of the orthorhombic phase and the monoclinic phase in the lithium manganese oxide have a significant difference, and the orthorhombic phase and the monoclinic phase can synergistically form a solid solution, promoting deintercalation of Li ions in the lithium manganese oxide, thereby further increasing the charge gram capacity of the lithium manganese oxide.

In some embodiments, the Raman spectrum of the positive electrode material has a characteristic peak 3 within a range of 270 cm⁻¹ to 279 cm⁻¹. The presence of the characteristic peak 3 in the Raman spectrum of the positive electrode material indicates that the monoclinic phase in the lithium manganese oxide has high crystal regularity, which is conducive to the deintercalation of lithium ions during charging, thereby increasing the charge capacity of the electrochemical apparatus.

In some embodiments, a half-peak width of the characteristic peak 3 is H3, satisfying: H3 ≤ 35 cm⁻¹. When the half-peak width H3 of the characteristic peak 3 is within this range, on one hand, relatively complete crystallization is achieved, providing a high delithiation capacity; on the other hand, a particle size of a single crystal is small, and a solid-phase diffusion path of lithium ions in the material is short, effectively improving the kinetic performance of the positive electrode material for lithium intercalation and deintercalation.

In some embodiments, the positive electrode material further includes an element M1, where based on a molar amount of element Mn in the positive electrode material, a molar percentage of the element M1 in the positive electrode material is a1, satisfying: 0.1% ≤ a1 ≤ 10%, where the element M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca.

In some embodiments, the positive electrode material further includes element Al, where based on the molar amount of the element Mn in the positive electrode material, a molar percentage of the element Al in the positive electrode material is b1, satisfying: 0.1% ≤ b1 ≤ 10%. The percentage of the element Al causes a change in phase proportion, and either an excessively high percentage or an excessively low percentage leads to an increase in intermediate phases in the material, increasing grain boundary barriers and thus resulting in reduced capacity.

In some embodiments, in the positive electrode material, a molar ratio of element Li to element Mn is c1, satisfying: 0.9 ≤ c1 ≤ 1.2. When the Li/Mn molar ratio is within the above range, an orthorhombic and monoclinic composite phase can be formed stably, thereby increasing the energy density of the electrochemical apparatus.

In some embodiments, the lithium manganese oxide has a layered structure. The layered structure is conducive to the deintercalation of Li ions in the lithium manganese oxide, thereby increasing the charge gram capacity of the lithium manganese oxide.

In some embodiments, the lithium manganese oxide includes LiₓMn_{y}M1_{z}O₂, where 0.9 ≤ x ≤ 1.2, 0.9 ≤ y ≤ 1, 0 ≤ z ≤ 0.1, and M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca. In some embodiments, 0.9 ≤ x ≤ 1.2, 0.9 ≤ y ≤ 1, and 0.001 ≤ z ≤ 0.1.

In some embodiments, the positive electrode material further includes a coating layer located on a surface of the positive electrode material, the coating layer includes an element M2, and based on a molar amount of the element Mn in the coating layer, a molar percentage of the element M2 in the coating layer is 0.05% to 2%, where the element M2 includes at least one of S, C, B, or F. The coating layer on the surface of the positive electrode material can further suppress dissolution of Mn, thereby improving the cycling and storage performance of the electrochemical apparatus.

In some embodiments, the positive electrode material further includes element Al. The positive electrode material includes a substrate and a coating layer. Based on a molar amount of the element Mn in the substrate, a molar percentage of the element Al in the substrate is d1, and based on a molar amount of the element Mn in the coating layer, a molar percentage of the element Al in the coating layer is d2, where d2/d1 ≥ 1.3.

In some embodiments, based on a mass of the positive electrode material, a percentage of residual lithium in the positive electrode material is less than or equal to 0.05%.

In some embodiments, a pH value of the positive electrode material is 11 to 12.

In a second aspect, this application provides a preparation method of the positive electrode material according to the first aspect. The preparation method includes: S1: mixing a manganese-containing oxide, a lithium source, and a selectable element M1 source to obtain a first mixture, and performing a first heat treatment on the first mixture in a first atmosphere at a first temperature to obtain a first lithium manganese oxide, where the manganese-containing oxide and the lithium source are mixed according to a lithium-to-manganese molar ratio Li/Mn of 0.9 to 1.2, and the first atmosphere is an inert atmosphere.

In some embodiments, the inert atmosphere includes at least one of nitrogen, argon, or helium.

In some embodiments, the first temperature is 880°C to 1100°C.

In some embodiments, the first heat treatment is performed for 5 hours to 20 hours.

In some embodiments, the manganese-containing oxide includes Mn₃O₄.

In some embodiments, the element M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca.

In some embodiments, the element M1 source includes at least one of CrO₂, Al₂O₃, MgO, TiO₂, or Y₂O₃.

In some embodiments, the manganese-containing oxide and the element M1 source are mixed according to an M1-to-Mn molar ratio of 0.001 to 0.1.

In some embodiments, the lithium source includes at least one of lithium hydroxide, lithium carbonate, lithium acetate, lithium nitrate, or lithium sulfate.

In some embodiments, after step S1, the method further comprises step S2: mixing the first lithium manganese oxide synthesized in S1 with an element M2 source to obtain a second mixture, and performing a second heat treatment on the second mixture in a second atmosphere at a second temperature to obtain a second lithium manganese oxide with a coating layer on surface.

In some embodiments, the second atmosphere is an inert atmosphere. In some embodiments, the inert atmosphere includes at least one of nitrogen, argon, or helium.

In some embodiments, the second heat treatment is performed for 2 hours to 5 hours. In some embodiments, the second temperature is 200°C to 600°C.

In some embodiments, the element M2 includes at least one of S, C, B, or F.

In a third aspect, this application provides an electrochemical apparatus including a positive electrode. The positive electrode includes the positive electrode material according to the first aspect or a positive electrode material prepared by using the preparation method according to the second aspect.

In a fourth aspect, this application provides an electrical apparatus including the electrochemical apparatus according to the third aspect.

### BRIEF DESCRIPTION OF DRAWINGS

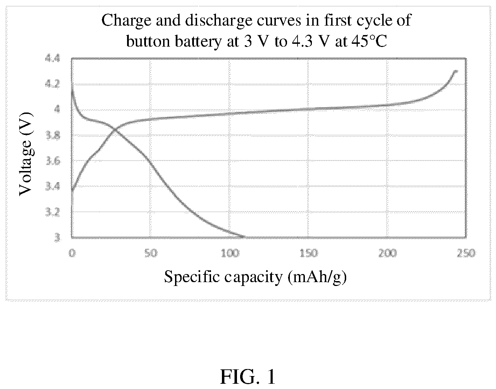

FIG. 1 is a charge/discharge curve diagram of a lithium-ion button battery in Example 1.

### DESCRIPTION OF EMBODIMENTS

To make the objectives, technical solutions, and advantages of this application clearer, the following clearly and completely describes the technical solutions in this application with reference to some embodiments. Apparently, the described embodiments are some but not all embodiments of this application. Relevant embodiments described herein are illustrative and used to provide a basic understanding of this application. Some embodiments of this application should not be construed as limitations on this application.

For brevity, this specification specifically discloses only some numerical ranges. However, any lower limit may be combined with any upper limit to form a range not explicitly recorded, and any lower limit may be combined with another lower limit to form a range not explicitly recorded, and likewise, any upper limit may be combined with any other upper limit to form a range not explicitly recorded. In addition, each individually disclosed point or individual numerical value may itself be a lower limit or an upper limit which can be combined with any other point or individual numerical value or combined with another lower limit or upper limit to form a range not explicitly recorded.

In the description of this specification, "more than" or "less than" is inclusive of the present number, unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

A list of items connected by the terms "at least one of", "at least one piece of", "at least one type of", or the like may mean any combination of the listed items. For example, if items A and B are listed, the phrase "at least one of A or B" means only A, only B, or A and B. In another example, if items A, B, or C are listed, the phrase "at least one of A, B, or C" means only A, only B, only C, A and B (excluding C), A and C (excluding B), B and C (excluding A), or all of A, B, and C. The item A may include a single constituent or a plurality of constituents. The item B may include a single constituent or a plurality of constituents. The item C may include a single constituent or a plurality of constituents.

In a first aspect, this application provides a positive electrode material including a lithium manganese oxide, where a Raman spectrum of the positive electrode material has a characteristic peak 1 within a range of 401 cm⁻¹ to 410 cm⁻¹ and a characteristic peak 2 within a range of 598 cm⁻¹ to 611 cm⁻¹. The characteristic peak 1 is a characteristic peak of an orthorhombic phase in the lithium manganese oxide, and the characteristic peak 2 is a characteristic peak of a monoclinic phase in the lithium manganese oxide. On one hand, the orthorhombic phase and monoclinic phase in the lithium manganese oxide have a high lithium storage capacity, which can provide a high charge gram capacity, thereby significantly increasing the energy density of the electrochemical apparatus. On the other hand, the monoclinic phase and the orthorhombic phase coexist to form a solid solution, which can improve the structural stability of the lithium manganese oxide when the electrochemical apparatus is in a charging state. The solid solution formed by the coexistence of the two phases has oxygen vacancy, which can promote deintercalation of lithium ions, thereby further increasing the charge specific capacity of the lithium manganese oxide. In addition, the presence of a composite phase structure of the orthorhombic phase and the monoclinic phase in the lithium manganese oxide can stabilize the structure of Mn and reduce lattice distortion of an octahedron, improving the stability of the crystal structure of the lithium manganese oxide in a highly delithiated state, thereby suppressing dissolution of the element Mn, and improving the cycling and storage performance of the electrochemical apparatus.

In some embodiments, a half-peak width of the characteristic peak 1 is H1, and a half-peak width of the characteristic peak 2 is H2, satisfying: H1 ≤ 25 cm⁻¹, and H2 ≤ 30 cm⁻¹. When the half-peak width H1 of the characteristic peak 1 and the half-peak width H2 of the characteristic peak 2 are within the above range, the orthorhombic phase and the monoclinic phase in the lithium manganese oxide both have high crystal regularity, which can suppress structural phase transitions during cycling and storage, thereby improving the cycling and storage performance of the electrochemical apparatus. In some embodiments, H1 is 13 cm⁻¹, 14 cm⁻¹, 15 cm⁻¹, 16 cm⁻¹, 17 cm⁻¹, 18 cm⁻¹, 19 cm⁻¹, 20 cm⁻¹, 21 cm⁻¹, 22 cm⁻¹, 23 cm⁻¹, 24 cm⁻¹, 25 cm⁻¹, or a range defined by any two of these values. In some embodiments, H2 is 20 cm⁻¹, 21 cm⁻¹, 22 cm⁻¹, 23 cm⁻¹, 24 cm⁻¹, 25 cm⁻¹, 26 cm⁻¹, 27 cm⁻¹, 28 cm⁻¹, 29 cm⁻¹, or a range defined by any two of these values.

In some embodiments, the positive electrode material in this application includes a lithium manganese oxide having both an orthorhombic phase structure and a monoclinic phase structure.

In some embodiments, a peak area of the characteristic peak 1 is S1, and a peak area of the characteristic peak 2 is S2, satisfying: 1 ≤ S2/S1 ≤ 5. In some embodiments, S2/S1 is 1.1, 1.3, 1.5, 1.7, 2.0, 2.3, 2.5, 2.7, 3.0, 3.3, 3.5, 3.7, 4.0, 4.3, 4.5, 4.7, or a range defined by any two of these values.

In some embodiments, 1 ≤ S2/S1 ≤ 1.3, or 2.2 ≤ S2/S1 ≤ 5. When S2/S1 is within the above range, the contents of the orthorhombic phase and the monoclinic phase in the lithium manganese oxide have a significant difference, and the orthorhombic phase and the monoclinic phase can synergistically form a solid solution, promoting deintercalation of Li ions in the lithium manganese oxide, thereby further increasing the charge gram capacity of the lithium manganese oxide.

In some embodiments, the Raman spectrum of the positive electrode material has a characteristic peak 3 within a range of 270 cm⁻¹ to 279 cm⁻¹. The presence of the characteristic peak 3 in the Raman spectrum of the positive electrode material indicates that the monoclinic phase in the lithium manganese oxide has high crystal regularity, which is conducive to the deintercalation of lithium ions during charging, thereby increasing the charge capacity of the electrochemical apparatus.

In some embodiments, a half-peak width of the characteristic peak 3 is H3, satisfying: H3 ≤35 cm⁻¹. In some embodiments, H3 is 18 cm⁻¹, 19 cm⁻¹, 20 cm⁻¹, 21 cm⁻¹, 22 cm⁻¹, 23 cm⁻¹, 24 cm⁻¹, 25 cm⁻¹, 26 cm⁻¹, 28 cm⁻¹, 29 cm⁻¹, 30 cm⁻¹, 31 cm⁻¹, 32 cm⁻¹, 33 cm⁻¹, 34 cm⁻¹, 35 cm⁻¹, or a range defined by any two of these values. When the half-peak width H3 of the characteristic peak 3 is within this range, on one hand, relatively complete crystallization is achieved, providing a high delithiation capacity; on the other hand, a particle size of a single crystal is small, and a solid-phase diffusion path of lithium ions in the material is short, effectively improving the kinetic performance of the positive electrode material for lithium intercalation and deintercalation.

In some embodiments, the positive electrode material further includes an element M1, where based on a molar amount of element Mn in the positive electrode material, a molar percentage of the element M1 in the positive electrode material is a1, satisfying: 0.1% ≤ a1 ≤ 10%, where the element M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca. In some embodiments, a1 is 0.1%, 0.5%, 1%, 15%, 2%, 2.5%, 3%, 3.5%, 4%, 4.5%, 5%, 5.5%, 6%, 6.5%, 7%, 7.5%, 8%, 8.5%, 9%, 9.5%, 10%, or a range defined by any two of these values.

In some embodiments, the positive electrode material further includes element Al, where based on the molar amount of the element Mn in the positive electrode material, a molar percentage of the element Al in the positive electrode material is b1, satisfying: 0.1% ≤ b1 ≤ 10%. In some embodiments, b1 is 0.1%, 0.5%, 1%, 15%, 2%, 2.5%, 3%, 3.5%, 4%, 4.5%, 5%, 5.5%, 6%, 6.5%, 7%, 7.5%, 8%, 8.5%, 9%, 9.5%, 10%, or a range defined by any two of these values. The percentage of the element Al causes a change in phase proportion, and either an excessively high percentage or an excessively low percentage leads to an increase in intermediate phases in the material, increasing grain boundary barriers and thus resulting in reduced capacity.

In some embodiments, in the positive electrode material, a molar ratio of element Li to element Mn is c1, satisfying: 0.9 ≤ c1 ≤ 1.2. In some embodiments, c1 is 0.91, 0.93, 0.95, 0.97, 0.99, 1.01, 1.03, 1.05, 1.07, 1.09, 1.11, 1.13, 1.15, 1.17, 1.19, or a range defined by any two of these values. When the Li/Mn molar ratio is within the above range, an orthorhombic and monoclinic composite phase can be formed stably, thereby increasing the energy density of the electrochemical apparatus.

In some embodiments, the lithium manganese oxide has a layered structure. The layered structure is conducive to the deintercalation of Li ions in the lithium manganese oxide, thereby increasing the charge gram capacity of the lithium manganese oxide.

In some embodiments, the lithium manganese oxide includes LiₓMn_{y}M1_{z}O₂, where 0.9 ≤ x ≤ 1.2, 0.9 ≤ y ≤ 1, 0 ≤ z ≤ 0.1, and M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca. In some embodiments, 0.9 ≤ x ≤ 1.2, 0.9 ≤ y ≤ 1, and 0.001 ≤ z ≤ 0.1.

In some embodiments, the positive electrode material further includes a coating layer located on a surface of the positive electrode material, the coating layer includes an element M2, and based on a molar amount of the element Mn in the coating layer, a molar percentage of the element M2 in the coating layer is 0.05% to 2%, where the element M2 includes at least one of S, C, B, or F. In some embodiments, the molar percentage of the element M2 is 0.05%, 0.1%, 0.3%, 0.5%, 0.7%, 0.9%, 1%, 1.3%, 1.5%, 1.7%, 1.9%, 2%, or a range defined by any two of these values. The coating layer on the surface of the positive electrode material can further suppress dissolution of Mn, thereby improving the cycling and storage performance of the electrochemical apparatus.

In some embodiments, the positive electrode material further includes element Al. The positive electrode material includes a substrate and a coating layer. Based on a molar amount of the element Mn in the substrate, a molar percentage of the element Al in the substrate is d1, and based on a molar amount of the element Mn in the coating layer, a molar percentage of the element Al in the coating layer is d2, where d2/d1 ≥ 1.3.

In some embodiments, based on a mass of the positive electrode material, a percentage of residual lithium in the positive electrode material is less than or equal to 0.05%. In some embodiments, the percentage of residual lithium in the positive electrode material is 0.0005%, 0.001%, 0.005%, 0.01%, 0.015%, 0.02%, 0.025%, 0.03%, 0.035%, 0.04%, 0.045%, or a range defined by any two of these values.

In some embodiments, a pH value of the positive electrode material is 11 to 12, for example, 11.3, 11.5, 11.7, or 11.9.

In a second aspect, this application provides a preparation method of the positive electrode material according to the first aspect. The preparation method includes: S1: mixing a manganese-containing oxide, a lithium source, and a selectable element M1 source to obtain a first mixture, and performing a first heat treatment on the first mixture in a first atmosphere at a first temperature to obtain a first lithium manganese oxide, where the manganese-containing oxide and the lithium source are mixed according to a lithium-to-manganese molar ratio Li/Mn of 0.9 to 1.2, and the first atmosphere is an inert atmosphere.

In some embodiments, the inert atmosphere includes at least one of nitrogen, argon, or helium.

In some embodiments, the first temperature is 880°C to 1100°C.

In some embodiments, the first heat treatment is performed for 5 hours to 20 hours.

In some embodiments, the manganese-containing oxide includes Mn₃O₄.

In some embodiments, the element M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca.

In some embodiments, the element M1 source includes at least one of CrO₂, Al₂O₃, MgO, TiO₂, or Y₂O₃.

In some embodiments, the manganese-containing oxide and the element M1 source are mixed according to an M1-to-Mn molar ratio of 0.001 to 0.1.

In some embodiments, the lithium source includes at least one of lithium hydroxide, lithium carbonate, lithium acetate, lithium nitrate, or lithium sulfate.

In some embodiments, after step S1, the method further comprises step S2: mixing the first lithium manganese oxide synthesized in S1 with an element M2 source to obtain a second mixture, and performing a second heat treatment on the second mixture in a second atmosphere at a second temperature to obtain a second lithium manganese oxide with a coating layer on surface.

In some embodiments, the second atmosphere is an inert atmosphere. In some embodiments, the inert atmosphere includes at least one of nitrogen, argon, or helium.

In some embodiments, the second heat treatment is performed for 2 hours to 5 hours. In some embodiments, the second temperature is 200°C to 600°C.

In some embodiments, the element M2 includes at least one of S, C, B, or F.

In a third aspect, this application provides an electrochemical apparatus including a positive electrode. The positive electrode includes a positive electrode active material layer, where the positive electrode active material layer includes the positive electrode material according to the first aspect or a positive electrode material prepared by using the preparation method according to the second aspect.

In some embodiments, the positive electrode active material layer further includes a conductive agent and a binder. In some embodiments, the binder includes but is not limited to polyvinyl alcohol, hydroxypropyl cellulose, diacetyl cellulose, polyvinyl chloride, carboxylated polyvinyl chloride, polyvinylpyrrolidone, polyurethane, polytetrafluoroethylene, polyvinylidene fluoride, styrene-butadiene rubber, or acrylic (acrylated) styrene-butadiene rubber. In some embodiments, the conductive agent includes but is not limited to a carbon-based material, a metal-based material, a conductive polymer, and a mixture thereof. In some embodiments, the carbon-based material is selected from graphite, carbon black, acetylene black, Ketjen black, carbon nanotubes, carbon fiber, graphene, or any combination thereof. In some embodiments, the metal-based material is selected from metal powder, metal fiber, copper, nickel, aluminum, or silver. In some embodiments, the conductive polymer is a polyphenylene derivative.

In some embodiments, the positive electrode further includes a positive electrode current collector. The positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

The electrochemical apparatus of this application further includes a negative electrode. The negative electrode includes a negative electrode active material layer and a negative electrode current collector.

In some embodiments, the negative electrode active material layer includes a negative electrode active material, a conductive agent and a binder. In some embodiments, the negative electrode active material may include a material for reversibly intercalating/deintercalating lithium ions, lithium metal, lithium metal alloy, or a transition metal oxide. In some embodiments, the negative electrode active material includes at least one of a carbon material or a silicon material. The carbon material includes at least one of graphite or hard carbon. The silicon material includes at least one of silicon, a silicon-oxygen compound, a silicon-carbon compound, or silicon alloy. In some embodiments, the binder may include various binder polymers. In some embodiments, the binder includes at least one of polyvinylidene fluoride, a vinylidene fluoride-hexafluoropropylene copolymer, polyamide, polyacrylonitrile, polyacrylic ester, polyacrylic acid, polyacrylate, sodium carboxymethyl cellulose, polyvinylpyrrolidone, polyvinyl ether, polytetrafluoroethylene, polyhexafluoropropylene, or styrene-butadiene rubber. In some embodiments, any conductive material causing no chemical change can be used as the conductive agent. In some embodiments, the conductive agent includes at least one of conductive carbon black, acetylene black, carbon nanotubes, Ketjen black, carbon fiber, or graphene.

In some embodiments, the negative electrode current collector may be copper foil, nickel foil, stainless steel foil, titanium foil, nickel foam, copper foam, a polymer substrate coated with a conductive metal, or a combination thereof.

The electrochemical apparatus of this application further includes an electrolyte. The electrolyte includes a lithium salt and a non-aqueous solvent.

In some embodiments of this application, the lithium salt is one or more selected from a group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ may be used as the lithium salt.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is dimethyl carbonate (DMC), diethyl carbonate (DEC), dipropyl carbonate (DPC), methyl propyl carbonate (MPC), ethyl propyl carbonate (EPC), ethyl methyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An example of the ether compound is dibutyl ether, tetraglyme, diglyme, 1,2-dimethoxyethane, 1,2-diethoxyethane, ethoxymethoxyethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments, in this electrochemical apparatus, a separator is disposed between the positive electrode and a negative electrode to prevent short circuits. A material and shape of the separator used in some embodiments of this application is not specifically limited, and any technology disclosed in the prior art may be used for the separator. In some embodiments, the separator includes a polymer, an inorganic substance, or the like formed by a material stable to the electrolyte of this application. For example, the separator may include a substrate layer and a surface treatment layer. The substrate layer is a non-woven fabric, film, or composite film of a porous structure. The substrate layer is made of at least one of polyethylene, polypropylene, polyethylene terephthalate, or polyimide. Specifically, a polypropylene porous film, a polyethylene porous film, polypropylene non-woven fabric, polyethylene non-woven fabric, or a polypropylene-polyethylene-polypropylene porous composite film may be selected. The surface treatment layer is provided on at least one surface of the substrate layer, and the surface treatment layer may be a polymer layer or an inorganic substance layer, or may be a layer formed by mixing a polymer and an inorganic substance. The inorganic substance layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene, or polyhexafluoropropylene. The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

In some embodiments, the electrochemical apparatus of this application includes but is not limited to all types of primary batteries or secondary batteries. In some embodiments, the electrochemical apparatus is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

In a fourth aspect, an electrical apparatus of this application may be any apparatus using the electrochemical apparatus according to the third aspect.

In some embodiments, the electrical apparatus includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a storage card, a portable recorder, a radio, a backup power supply, a motor, an automobile, a motorcycle, a motor bicycle, a bicycle, a lighting apparatus, a toy, a game console, a clock, an electric tool, a flashlight, a camera, a large household storage battery, or a lithium-ion capacitor.

### Examples and comparative examples

### 1. Preparation of positive electrode material

### Comparative example 1

Li₂CO₃ and MnO₂ were weighed according to a Li-to-Mn molar ratio of 0.56:1; Al₂O₃ was added according to an Al-to-Mn molar ratio of 0.03; these materials were mixed in a high-speed mixer at a speed of 300 r/min for 20 minutes to obtain a mixture; and the mixture was placed in an air kiln, heated up to 790°C at a rate of 5°C/min, maintained at that temperature for 24 h, cooled naturally, taken out, and sieved through a 300-mesh sieve to obtain spinel-type lithium manganate.

### Comparative example 2

Conventional method: Mn₂O₃ and Na₂CO₃ were mixed to uniformity according to a Na-to-Mn molar ratio of 1.05:1, heated up to 800°C at a rate of 5°C/min in an N₂ atmosphere, and maintained at that temperature for 24 h to obtain NaMnO₂; a LiBr ethanol solution with a concentration of 5 mol/L was added according to a LiBr-to-NaMnO₂ molar ratio of 10:1; exchange was performed at 180°C in an air atmosphere for 8 h; after that, the resulting mixture was washed with ethanol; and then powder obtained after washing was dried in an oven at 120°C for 5 h to obtain lithium manganese oxide prepared by the conventional method.

### Example 1 to Example 19

Step 1: Mn(OOH) was placed in a crucible, heated up to 500°C at a rate of 5°C/min in an air atmosphere, and maintained at that constant temperature for 4 h to obtain anhydrous Mn₃O₄.

Step 2: Anhydrous Mn₃O₄ and LiOH were weighed according to a Li-to-Mn molar ratio (see Table 1 for a specific ratio), simultaneously added with an additive containing element M1 (see Table 1 for a type and an amount of the additive added), and mixed for 8 h using a mechanical ball milling device to obtain a mixture. The mixture was placed in a crucible, nitrogen was introduced at a rate of 2 m³/h, and the mixture was heated up to a sintering temperature at a rate of 5°C/min, sintered for a period of time (see Table 1 for a specific sintering temperature and time) at a constant temperature, and then cooled naturally to room temperature to obtain a layered lithium manganese oxide LiMnO₂ positive electrode material.

**Table 1**

| Example | **Li/Mn** molar ratio | Additive | | | Sintering conditions in step 2 | |
|---|---|---|---|---|---|---|
| | | Type | M1-to-Mn molar ratio | | Sintering temperature (°C) | Sintering time (h) |
| | | | Al/Mn | Another element/Mn | | |
| Example 1 | 1.05 | Al₂O₃ | 0.03 | 0 | 940 | 15 |
| Example 2 | 1.05 | Al₂O₃ | 0.03 | 0 | 940 | 28 |
| Example 3 | 1.05 | Al₂O₃ | 0.03 | 0 | 940 | 8 |
| Example 4 | 1.05 | Al₂O₃ | 0.03 | 0 | 880 | 15 |
| Example 5 | 1.05 | Al₂O₃ | 0.03 | 0 | 1050 | 15 |
| Example 6 | 1.15 | Al₂O₃ | 0.03 | 0 | 940 | 15 |
| Example 7 | 1.00 | Al₂O₃ | 0.03 | 0 | 940 | 15 |
| Example 8 | 0.92 | Al₂O₃ | 0.03 | 0 | 940 | 15 |
| Example 9 | 1.05 | Al₂O₃ | 0.10 | 0 | 940 | 15 |
| Example 10 | 1.05 | Al₂O₃ | 0.06 | 0 | 940 | 15 |
| Example 11 | 1.05 | Al₂O₃ | 0.02 | 0 | 940 | 15 |
| Example 12 | 1.05 | Al₂O₃ | 0.001 | 0 | 940 | 15 |
| Example 13 | 1.05 | CrO₂ | 0 | 0.03 (Cr) | 940 | 15 |
| Example 14 | 1.05 | Al₂O₃ + CrO₂ | 0.02 | 0.01 (Cr) | 940 | 15 |
| Example 15 | 1.05 | Al₂O₃ + TiO₂ | 0.02 | 0.01 (Ti) | 940 | 15 |
| Example 16 | 1.05 | Al₂O₃ + MgO | 0.02 | 0.01 (Mg) | 940 | 15 |
| Example 17 | 1.05 | Al₂O₃+Y₂O₃ | 0.02 | 0.01 (Y) | 940 | 15 |
| Example 18 | 1.05 | Al₂O₃ + CrO₂ + Y₂O₃ | 0.02 | 0.01 (Cr) + 0.01 (Y) | 940 | 15 |
| Example 19 | 1.05 | Al₂O₃ + CrO₂ + Y₂O₃ | 0.03 | 0.01 (Cr) + 0.01 (Y) | 940 | 15 |

### Example 20 to Example 26

Example 20 to Example 22 differed from Example 1 in that the surface of the material in Example 1 was further coated with a modified layer, including specific steps as follows: the lithium manganese oxide in Example 1 was mixed with nano NH₄F (percentages of NH₄F were respectively 0.001, 0.03, and 0.1 based on an F-to-Mn molar ratio) in a high-speed mixer for 0.5 h, and heated up to 450°C at a rate of 5°C/min in a nitrogen atmosphere; and constant-temperature treatment was performed for 2 h.

Example 23 differed from Example 21 in that nano NH₄F was replaced with H₃BO₃, mixed in a high-speed mixer for 0.5 h, and heated up to 280°C at a rate of 5°C/min in a nitrogen atmosphere; and constant-temperature treatment was performed for 2 h.

Example 24 to Example 26 differed from Example 20 in that nano NH₄F was replaced with Al₂O₃ (percentages of Al₂O₃ were respectively 0.03, 0.001, and 0.1 based on an Al-to-Mn molar ratio), mixed in a high-speed mixer for 0.5 h, and then heated up to 600°C at a rate of 5°C/min in a nitrogen atmosphere; and constant-temperature treatment was performed for 2 h.

### 2. Preparation of lithium-ion button battery

The foregoing positive electrode material, conductive carbon black (Super-P), and a binder polyvinylidene fluoride (PVDF) were fully stirred and mixed to uniformity in an N-methylpyrrolidone (NMP) solvent system according to a weight ratio of 90:5:5; the resulting mixture was applied onto an aluminum foil, with a coating mass controlled to be 10 mg/cm² to 30 mg/cm²; and the aluminum foil was dried at 105°C, cold-pressed, and punched to obtain a positive electrode plate.

The positive electrode plate, a separator, and a lithium metal sheet were placed in sequence into a steel housing of a button battery; an appropriate amount of electrolyte (1M LiPF₆, at an EC:EMC:DEC volume ratio of 1:1:1) was dropwise added; and then the housing was sealed to obtain the button battery.

### Test method

### 1. Raman Test

The positive electrode material powder was placed on an objective table, and characterized using a Horibr hr revolution device. Specific parameters were as follows: resolution: ~2 cm⁻¹; and excitation wavelength: 532 nm.

### 2. Element percentage test

Percentages of element Mn, element M1, and element Li: The positive electrode material was dissolved using a solvent mixture (for example, 0.4 g of the positive electrode material was dissolved in a solvent mixture of 10 ml aqua regia (a mixture of nitric acid and hydrochloric acid at a ratio of 1:1) and 2 ml HF); a volume was adjusted to 100 mL; and then an ICP-OES (inductively coupled plasma-optical emission spectrometer, device model: ICAP6300) was used to determine the percentages of the element Mn, element M1, and element Li in the positive electrode material.

Percentages of element M2 and element Mn in the coating layer: An XPS was used to test and obtain the percentages of the element M2 and element Mn in the coating layer on the surface of the positive electrode material.

Percentages of element Al and element Mn in the coating layer and the substrate: A TEM-EDS was used to test and obtain the percentages of the element Al and element Mn in the substrate and the coating layer of the positive electrode material.

### 3. Percentage test for residual lithium in positive electrode material

Lithium carbonate and lithium hydroxide in the positive electrode material were titrated with a standard hydrochloric acid solution using an acid-base titration method. Instrument model: 905 Titrando potentiometric titrator; and reagent: 0.05 mol/L HCl solution.

### 4. Gram capacity and initial coulombic efficiency Test

In a 45°C environment, the lithium-ion button battery was charged to 4.3 V at a constant current of 0.1C, and then charged to a current of 0.05C at a constant voltage of 4.3 V; an initial charge capacity of the lithium-ion button battery was recorded; then the lithium-ion button battery was discharged to 3.0 V at a constant current of 0.1C; and an initial discharge capacity of the lithium-ion button battery was recorded.

Charge gram capacity = initial charge capacity / mass of positive electrode material. Initial efficiency = initial discharge capacity / initial charge capacity × 100%.

### 5. Element Mn dissolution test

In a 25°C environment, the lithium-ion button battery was charged to 4 V at a constant current of 0.1C and then disassembled to obtain a positive electrode plate; and the positive electrode plate was soaked in an electrolyte (1M LiPF₆, at an EC:EMC:DEC volume ratio of 1:1:1) at 60°C for 7 days. An ICP was used to test a percentage of the element Mn in the electrolyte, where dissolution amount of element Mn = mass of element Mn in electrolyte / mass of positive electrode material.

### Test result

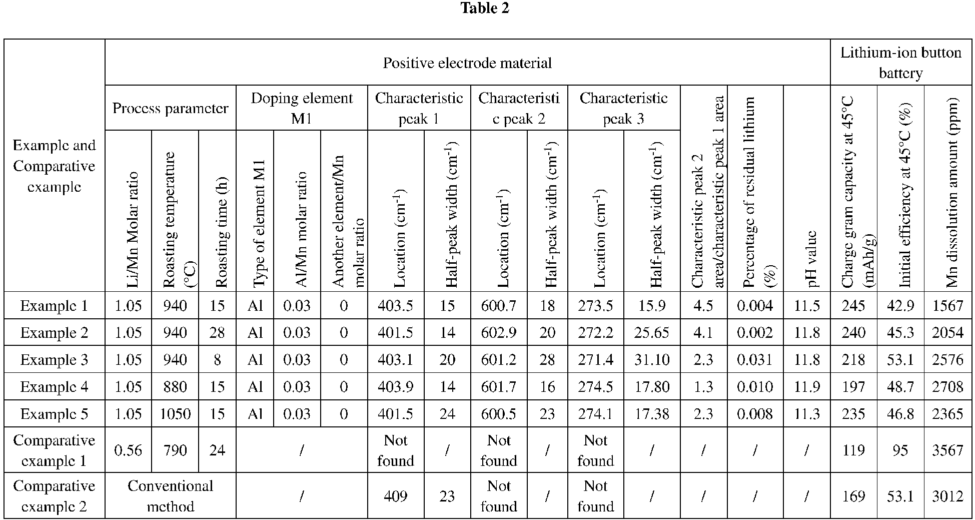

From the data of Example 1 and Comparative examples 1 and 2, it can be seen that when both characteristic peak 1 and characteristic peak 2 are present, the positive electrode material has a high charge gram capacity. This is mainly because the orthorhombic phase and the monoclinic phase in the lithium manganese oxide are rich in lithium ions, and the solid solution formed by the coexistence of the two phases has oxygen vacancy, which can promote deintercalation of lithium ions, thereby significantly increasing the charge gram capacity of the lithium manganese oxide. In addition, the presence of the composite phase structure of the orthorhombic phase and the monoclinic phase in the lithium manganese oxide can stabilize the structure of Mn and reduce lattice distortion of an octahedron, thereby improving the stability of the crystal structure of the lithium manganese oxide in a highly delithiated state, thereby suppressing dissolution of the element Mn, and prolonging the service life thereof under high-temperature conditions.

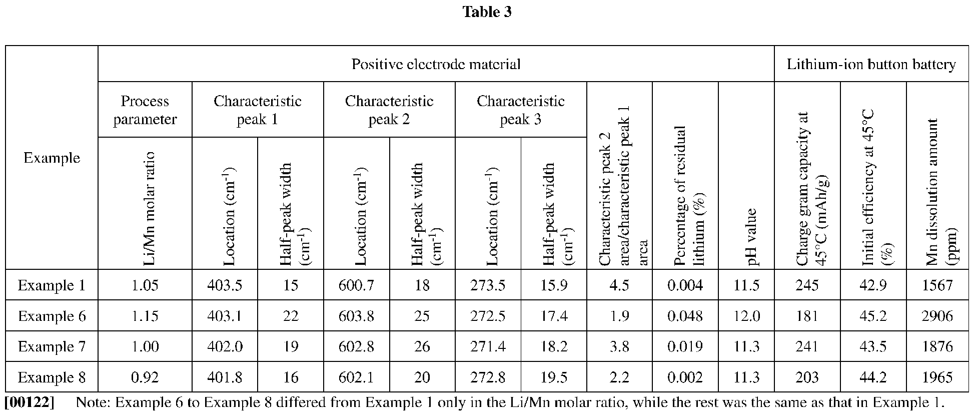

From the data of Example 1 and Example 6 to Example 8, it can be seen that the Li/Mn molar ratio affects the capacity of the positive electrode material. When the Li/Mn molar ratio is within the range of 0.9 to 1.2, an orthorhombic and monoclinic composite phase can be stably formed, thereby increasing the energy density of the electrochemical apparatus.

**Table 4**

| Example | Positive electrode material | | | | | | | | | | Lithium-ion button battery | | |
|---|---|---|---|---|---|---|---|---|---|---|---|---|---|
| | Al/Mn molar ratio | Characteristic peak 1 | | Characteristic peak 2 | | Characteristic peak 3 | | Characteristic peak 2 area/characteristic peak 1 area | Percentage of residual lithium (%) | pH value | Charge gram capacity at 45°C (mAh/g) | Initial efficiency at 45°C (%) | Mn dissolution amount (ppm) |
| | | **Location** (cm⁻¹) | Half-peak width (cm⁻¹) | **Location** (cm⁻¹) | Half-peak width (cm⁻¹) | **Location** (cm⁻¹) | Half-peak width (cm⁻¹) | | | | | | |
| Example 1 | 0.03 | 403.5 | 15 | 600.7 | 18 | 273.5 | 15.9 | 4.5 | 0.004 | 11.5 | 245 | 42.9 | 1567 |
| Example 9 | 0.1 | 401.3 | 23 | 602.1 | 19 | 272.9 | 20.1 | 3.1 | 0.016 | 11.3 | 249 | 45.5 | 1098 |
| Example 10 | 0.06 | 402.1 | 22 | 601.2 | 20 | 272.7 | 25.6 | 4.2 | 0.010 | 11.5 | 246 | 43.6 | 1276 |
| Example 11 | 0.02 | 402.8 | 19 | 600.2 | 25 | 272.2 | 22.4 | 1.7 | 0.012 | 11.6 | 185 | 45.9 | 2907 |
| Example 12 | 0.001 | 402.5 | 14 | 603.2 | 30 | 270.6 | 16 | 1.2 | 0.010 | 11.6 | 210 | 44.1 | 2208 |

| | | | | | | | | | | | | | |
|---|---|---|---|---|---|---|---|---|---|---|---|---|---|
| Note: Example 9 to Example 12 differed from Example 1 only in percentage of Al, while the rest was the same as that in Example 1. | | | | | | | | | | | | | |

From the data of Example 1 to Example 12, it can be seen that when 1 ≤ S2/S1 ≤ 1.3, or 2.2 ≤ S2/S1 ≤ 5 is satisfied, the lithium-ion button battery can have a higher charge specific capacity. The possible reason is that the contents of the orthorhombic phase and the monoclinic phase in the lithium manganese oxide have a significant difference, and the orthorhombic phase and the monoclinic phase can synergistically form a solid solution, promoting deintercalation of Li ions in the lithium manganese oxide, thereby further increasing the charge gram capacity of the lithium manganese oxide.

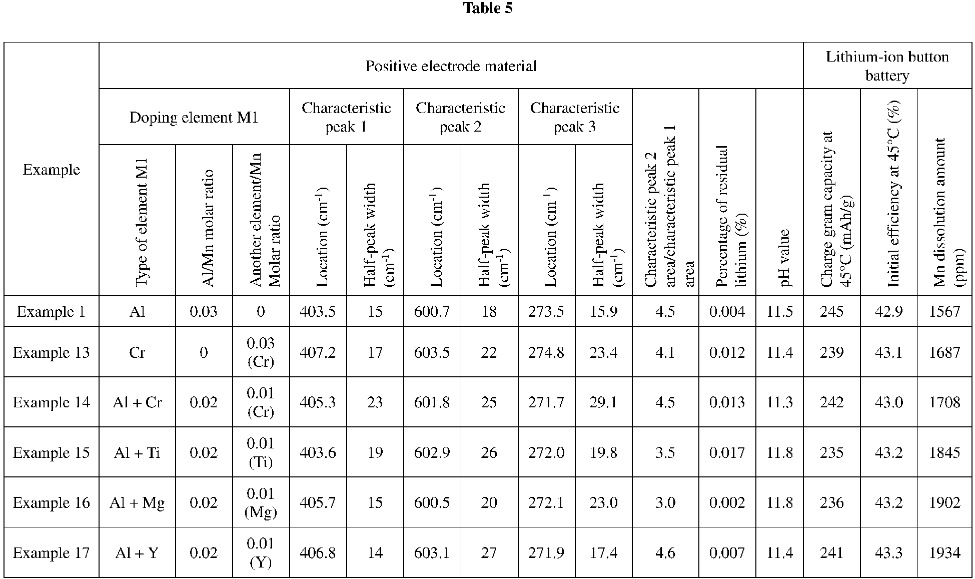

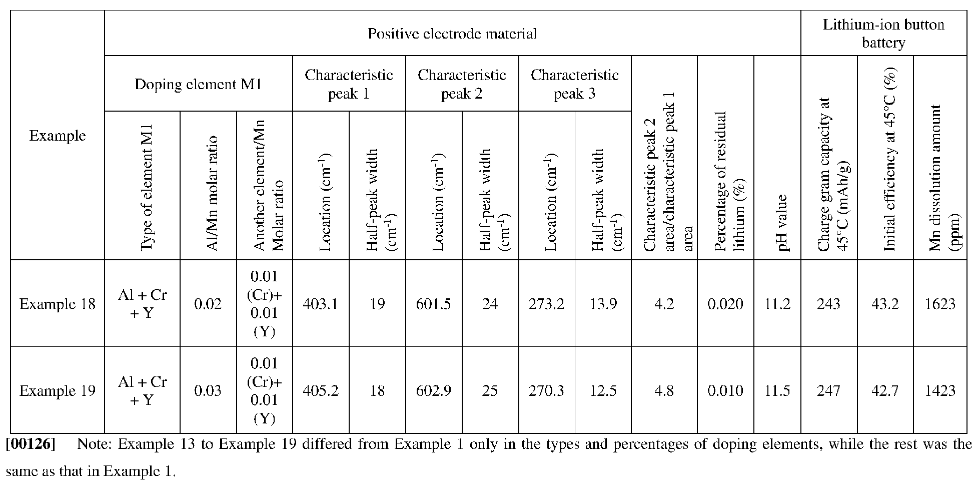

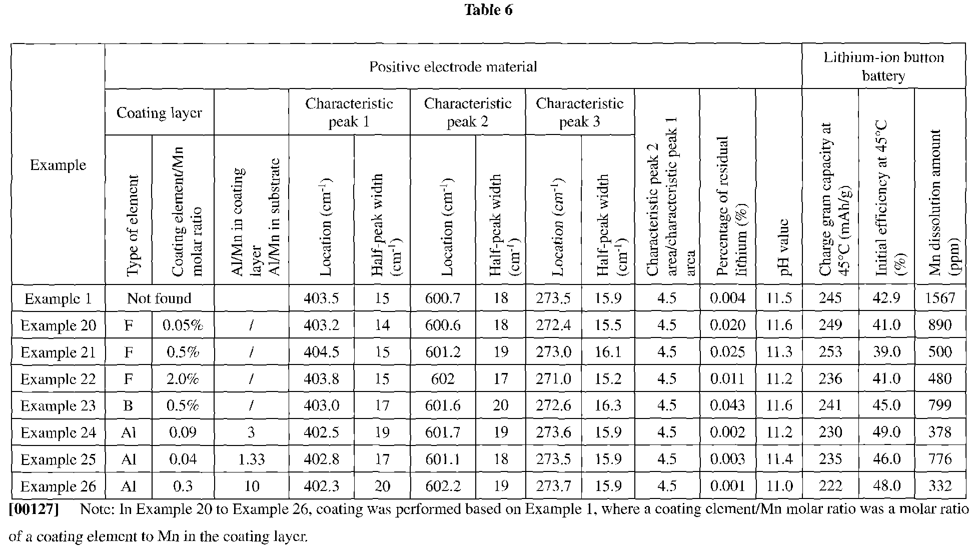

From the data of Example 1 and Example 20 to Example 26, it can be seen that the adoption of the coating layer can significantly improve the dissolution of Mn.

Although some exemplary embodiments of this application have been illustrated and described, this application is not limited to the disclosed embodiments. On the contrary, persons of ordinary skill in the art will recognize that some modifications and changes can be made to the described embodiments without departing from the spirit and scope of this application described in the appended claims.

## Claims

1. A positive electrode material, comprising a lithium manganese oxide, wherein a Raman spectrum of the positive electrode material has a characteristic peak 1 within a range of 401 cm⁻¹ to 410 cm⁻¹ and a characteristic peak 2 within a range of 598 cm⁻¹ to 611 cm⁻¹.

2. The positive electrode material according to claim 1, wherein the positive electrode material satisfies at least one of the following conditions (1) or (2):
(1) a half-peak width of the characteristic peak 1 is H1, and a half-peak width of the characteristic peak 2 is H2, satisfying: H1 ≤ 25 cm⁻¹, and H2 ≤ 30 cm⁻¹; or
(2) a peak area of the characteristic peak 1 is S1, and a peak area of the characteristic peak 2 is S2, satisfying: 1 ≤ S2/S1 ≤ 5.

3. The positive electrode material according to claim 2, wherein 1 ≤ S2/S1 ≤ 1.3, or 2.2 ≤ S2/S1 ≤ 5.

4. The positive electrode material according to claim 1, wherein the Raman spectrum of the positive electrode material has a characteristic peak 3 within a range of 270 cm⁻¹ to 279 cm⁻¹.

5. The positive electrode material according to claim 4, wherein a half-peak width of the characteristic peak 3 is H3, satisfying: H3 ≤ 35 cm⁻¹.

6. The positive electrode material according to claim 1, wherein the positive electrode material satisfies at least one of the following conditions (a) to (e):
(a) the positive electrode material further comprises an element M1, wherein based on a molar amount of element Mn in the positive electrode material, a molar percentage of the element M1 in the positive electrode material is a1, satisfying: 0.1% ≤ a1 ≤ 10%, wherein the element M1 includes at least one of Al, Nb, Mg, Ti, W, Ga, Zr, W, Y, V, Sr, Mo, Ru, Ag, Sn, Au, La, Ce, Pr, Nd, Sm, Gd, Cu, Na, Zn, Fe, Co, Ni, Cr, or Ca;
(b) the positive electrode material further comprises element Al, wherein based on a molar amount of element Mn in the positive electrode material, a molar percentage of the element Al in the positive electrode material is b1, satisfying: 0.1% ≤ b1 ≤ 10%;
(c) in the positive electrode material, a molar ratio of element Li to element Mn is c1, satisfying: 0.9 ≤ c1 ≤ 1.2;
(d) the lithium manganese oxide has a layered structure; or
(e) the lithium manganese oxide comprises LiₓMn_{y}M1_{z}O₂, wherein 0.9 ≤ x ≤ 1.2, 0.9 ≤ y ≤ 1, 0 ≤ z ≤ 0.1, and M1 includes at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca.

7. The positive electrode material according to claim 1, wherein the positive electrode material further comprises a coating layer located on a surface of the positive electrode material, the coating layer comprises an element M2, and based on a molar amount of the element Mn in the coating layer, a molar percentage of the element M2 in the coating layer is 0.05% to 2%, wherein the element M2 comprises at least one of S, C, B, or F.

8. The positive electrode material according to claim 1, wherein the positive electrode material further comprises element Al; the positive electrode material comprises a substrate and a coating layer; based on a molar amount of element Mn in the substrate, a molar percentage of the element Al in the substrate is d1, and based on a molar amount of the element Mn in the coating layer, a molar percentage of the element Al in the coating layer is d2, wherein d2/d1 ≥ 1.3.

9. The positive electrode material according to claim 1, wherein based on a mass of the positive electrode material, a percentage of residual lithium in the positive electrode material is less than or equal to 0.05%; and/or
a pH value of the positive electrode material is 11 to 12.

10. A preparation method of positive electrode material, wherein the method comprises:
S1: mixing a manganese-containing oxide, a lithium source, and a selectable element M1 source to obtain a first mixture, and performing a first heat treatment on the first mixture in a first atmosphere at a first temperature to obtain a first lithium manganese oxide;
wherein the manganese-containing oxide and the lithium source are mixed according to a lithium-to-manganese molar ratio Li/Mn of 0.9 to 1.2, and the first atmosphere is an inert atmosphere.

11. The preparation method of positive electrode material according to claim 10, wherein the preparation method satisfies at least one of the following conditions:
(1) the inert atmosphere comprises at least one of nitrogen, argon, or helium;
(2) the first temperature is 880°C to 1100°C;
(3) the calcination time is 5 hours to 20 hours;
(4) the manganese-containing oxide comprises Mn₃O₄;
(5) the element M1 comprises at least one of Al, Nb, Mg, Ti, W, Ga, Zr, Y, V, Sr, Mo, Ru, Ag, Sn, Au, La, Ce, Pr, Nd, Sm, Gd, Cu, Na, Zn, Fe, Co, Ni, Cr, or Ca;
(6) the element M1 source comprises at least one of CrO₂, Al₂O₃, MgO, TiO₂, or Y₂O₃;
(7) the manganese-containing oxide and the element M1 source are mixed according to an M1-to-Mn molar ratio of 0.001 to 0.1;
(8) the lithium source comprises at least one of lithium hydroxide, lithium carbonate, lithium acetate, lithium nitrate, or lithium sulfate; or
(9) after step S1, the method further comprises step S2: mixing the first lithium manganese oxide with an element M2 source to obtain a second mixture, and performing a second heat treatment on the second mixture in a second atmosphere at a second temperature to obtain a second lithium manganese oxide with a coating layer on surface.

12. The preparation method of positive electrode material according to claim 11, wherein the preparation method satisfies at least one of the following conditions:
(1) the second atmosphere is an inert atmosphere;
(2) the second heat treatment time is 2 hours to 5 hours;
(3) the second temperature is 200°C to 600°C; or
(4) the element M2 comprises at least one of S, C, B, or F.

13. An electrochemical apparatus, comprising a positive electrode, wherein the positive electrode comprises the positive electrode material according to any one of claims 1 to 9 or a positive electrode material prepared using the preparation method of positive electrode material according to any one of claims 10 to 12.

14. An electrical apparatus, comprising the electrochemical apparatus according to claim 13.
